# EUROPÄISCHE PATENTSCHRIFT

(11) **EP 3 574 628 B1**
(45) Veröffentlichungstag und Bekanntmachung des Hinweises auf die Patenterteilung: **09.12.2020**
(21) Anmeldenummer: 18701660.5
(22) Anmeldetag: 22.01.2018
(51) Int. Cl.: H04L 29/08, G06F 9/451, H04L 29/06, G06F 9/445

(54) **VERFAHREN ZUM DURCHFÜHREN EINES VON EINEM SERVER SPEZIFIZIERTEN PROGRAMMAUFRUFS DURCH EINEN CLIENT**
METHOD FOR PERFORMING A SERVER-SPECIFIED PROGRAM START-UP VIA A CLIENT
PROCÉDÉ D'EXÉCUTION D'UN APPEL DU PROGRAMME SPÉCIFIQUE AU SERVEUR PAR UN CLIENT

(30) Priorität: 24.01.2017 AT 500402017
(43) Veröffentlichungstag der Anmeldung: 04.12.2019
(73) Patentinhaber: Lugschitz, Werner, 2752 Wöllersdorf (AT)
(72) Erfinder: Lugschitz, Werner, 2752 Wöllersdorf (AT)
(74) Vertreter: Wildhack & Jellinek
(86) Internationale Anmeldenummer: PCT/AT2018/060018
(87) Internationale Veröffentlichungsnummer: WO 2018/136984

(56) Entgegenhaltungen:
- US-A1- 2008 137 133
- US-A1- 2008 201 485
- US-B1- 6 233 543

## Beschreibung

Die Erfindung betrifft ein Verfahren zum Durchführen eines von einem Server spezifizierten Programmaufrufs auf einen Client gemäß Patentanspruch 1.

Aus dem Stand der Technik ist eine Vielzahl unterschiedlicher serverseitiger Softwaredienstleistungen bekannt, die unter dem Oberbegriff "Software as a Service" zusammengefasst werden. Dabei handelt es sich generell um serverseitige Services, bei denen es einem Benutzer, der über einen Clientrechner auf einem Server eingeloggt ist, ermöglicht wird, eine Remote-Desktop-Session zu starten, wobei auf dem Server eine - typischerweise graphische - Benutzeroberfläche erzeugt wird, die an den Client weitergeleitet wird. Ebenso werden Benutzereingaben, die vom Benutzer am Clientrechner ausgeführt werden, an den Server weitergeleitet und auf diesem ausgeführt.

Der Vorteil der Zurverfügungstellung von Programmen über eine solche Remote-Desktop-Session liegt gegenüber dem Verteilen von Software zur lokalen Installation darin, dass bestimmte, vom Betreiber des Servers zur Verfügung gestellte Programme nicht auf beliebigen Umgebungen des Benutzers lauffähig sein brauchen, sondern lediglich auf einer vom Betreiber selbst festgelegten Umgebung auf dem betreffenden Server. Dabei können insbesondere benötigte Standard-Programmbibliotheken vorinstalliert werden. Typischerweise handelt es sich bei einer solchen vom Betreiber zur Verfügung gestellten Software um eine Datenbankanwendung. Bei einer typischen Installation ist auf dem Server ein Betriebssystem installiert, das den Ablauf der betreffenden Anwendung, insbesondere Benutzerinteraktionen des Clients verarbeitet und den virtuellen Bildschirminhalt, der im Rahmen der Remote-Desktop-Session an den Client weitergeleitet wird, erstellt. Beispielhafte Lösungen werden in den Veröffentlichungen US 2008/0137133 A1, US 2008/0201485 A1 und US 6 233 543 B1 offenbart.

Probleme bei derartigen Systemen treten immer dann auf, wenn Daten zwischen einem solchen Server und Client übertragen werden sollen. Typischerweise ist die Anzahl der auf dem Remote-Desktop-System zur Verfügung gestellten Anwendungen beschränkt, sodass es erforderlich wird, einzelne der auf dem Server erstellten Daten auf den Client zu übertragen. Darüber hinaus kann es auch erforderlich sein, Ressourcen des Clients, wie beispielsweise Drucker oder lokale Verzeichnisse, zu nutzen.

Da es sich bei dem Remote Desktopsystem auf dem Server um einen vom Client verschiedenen Rechner handelt, ist es nicht ohne weiteres möglich, auf dem Server befindliche Dokumente auf einem mit dem Client verbundenen, im lokalen Netzwerk des Client befindlichen Drucker auszudrucken oder auch anzuzeigen. Werden beispielsweise für das Abspeichern bestimmter Informationen Dateien auf dem Client verwendet, die ein bestimmtes Dateiformat haben, so können diese möglicherweise auf dem Server bzw. auf der Remote-Desktop-Session angezeigt werden, der Client verwendet jedoch unter Umständen für die Anzeige von Dateien mit demselben Dateiformat ein gänzlich anderes Standardprogramm, das auf dem Server nicht zur Verfügung steht.

Aufgabe der Erfindung ist es, diese Probleme zu überwinden und ein Verfahren zum Durchführen eines von einem Server spezifizierten Programmaufrufs auf einem Client zur Verfügung zu stellen, mit dem auf dem Server befindliche Daten oder Informationen korrekt mittels des Clients weiter verarbeitet werden können.

Die Erfindung löst diese Aufgabe bei einem Verfahren der eingangs genannten Art mit den Merkmalen des Patentanspruchs 1. Dabei ist vorgesehen, dass
a) auf Anfrage des Clients zwischen dem Client und dem Server eine Remote-Desktop-Session aufgebaut wird, wobei vom Client aus ein dem Benutzer zugewiesener Benutzername und ein Passwort an den Server übermittelt werden, dessen Verbindungsadresse vom Benutzer angegeben wird,
b) wobei die Verbindungsadresse und der Benutzername auf dem Client nach dem Aufbau der Remote-Desktop-Session lokal abgespeichert werden,
c) wobei auf dem Client ein clientseitiges Datenaustauschprogramm abläuft, das eine Datenaustauschverbindung zu einem auf dem Server ablaufenden serverseitigen Datenaustauschprogramm herstellt, wobei das serverseitige Datenaustauschprogramm nach dem Aufbau der Datenaustauschverbindung einen die betreffende Datenaustauschverbindung eindeutig kennzeichnenden Schlüssel vergibt,
d) wobei das clientseitiges Datenaustauschprogramm aufgrund der lokal abgespeicherten Zuordnung zwischen Benutzernamen und Verbindungsadresse des Servers den Benutzernamen desjenigen Benutzers ermittelt, der aktuell oder zuletzt eine Remote-Desktop-Session mit dem Server aufgebaut hat, und
e) wenn ein solcher Benutzer aufgefunden wurde, der Benutzername dieses Benutzers vom clientseitigen Datenaustauschprogramm an das serverseitige Datenaustauschprogramm übermittelt wird, und
f) das serverseitige Datenaustauschprogramm den Benutzernamen gemeinsam mit der betreffenden Datenaustauschverbindung kennzeichnenden Schlüssel in einer Zuordnungstabelle abspeichert,
g) wobei bei Bestehen der Remote-Desktop-Session ein Programm auf dem Server ausgeführt wird,
h) wobei dieses Programm einen Programmaufruf an eine von dem serverseitigen Datenaustauschprogramm bereitgestellten Schnittstelle übermittelt, wobei dem Programmaufruf der für die Remote-Desktop-Session verwendete Benutzername beigefügt ist,
i) wobei das serverseitigen Datenaustauschprogramm aufgrund des Benutzernamens in der Zuordnungstabelle denjenigen Schlüssel sucht, der dem Benutzernamen zugewiesen wurde, und
j) das serverseitige Datenaustauschprogramm den Programmaufruf an denjenigen Client übermittelt, zu dem eine Verbindung mit dem betreffenden Schlüssel besteht, und
k) wobei das clientseitigen Datenaustauschprogramm den bei ihm eingelangten Programmaufruf an die lokale clientseitige Konfiguration anpasst und anschließend ausführt.

Zur vorteilhaften Übertragung und Weiterverarbeitung von Dateien zwischen Server und Client kann vorgesehen sein, dass
- in Schritt j) vom serverseitigen Datenaustauschprogramm die im Programmaufruf angegebenen und für den Programmaufruf erforderlichen Dateien gesucht und gemeinsam mit dem Programmaufruf an den Client übertragen werden, und
- wobei das clientseitige Datenaustauschprogramm in Schritt k) ein in der lokalen Konfiguration des Clients abgespeichertes Standard-Programm zur Behandlung von Dateien desjenigen Typs ausgewählt wird, der dem Typ der übertragenen Datei entspricht und dieses Standard-Programm dazu veranlasst wird, die übertragene Datei entsprechend dem Programmaufruf zu behandeln, insbesondere zur Ansicht und/oder Modifikation bereitzuhalten oder zu drucken.

Um eine Benutzbarkeit der auf dem Server abgespeicherten und an den Client übertragenen Daten möglichst einheitlich mit der Nutzung der auf dem Client befindlichen Daten zu ermöglichen, kann vorgesehen sein,
- dass der Client an einen Speicher mit einer Anzahl von Dateien in Datenverbindung steht,
- wobei in Schritt j) ein Programmaufruf erstellt wird, der eine auf dem Speicher liegende Datei betrifft,
- in Schritt k) vom clientseitigen Datenaustauschprogramm die betreffende Datei ermittelt und lokalisiert wird, und
- wobei das clientseitige Datenaustauschprogramm in Schritt k) ein in der lokalen Konfiguration abgespeichertes Standard-Programm zur Behandlung von Dateien desjenigen Typs ausgewählte wird, der dem Typ der übertragenen Datei entspricht und dieses Standard-Programm dazu veranlasst wird, die betreffende Datei entsprechend dem Programmaufruf zu behandeln, insbesondere zur Ansicht und/oder Modifikation bereitzuhalten oder zu drucken.

Um auf dem Server Referenzen auf Dateien abspeichern zu können, die lokal auf dem Client oder auf einem mit dem Client verbundenen lokalen Netzwerk abgespeichert sind, kann vorgesehen sein, dass in der lokalen Konfiguration des Clients für bestimmte Arten von vorgegebenen Typen von Programmaufrufen und Dateitypen Standard-Aufrufe von Standard-Programmen angegeben sind, und dass für den Fall, dass ein Programmaufruf des betreffenden Typs hinsichtlich einer Datei des betreffenden Dateityps auszuführen ist, der betreffende Standard-Aufruf unter Verwendung dieser Datei ausgeführt wird.

Um zu ermöglichen, dass aufgrund eines serverseitig vorliegenden und durchzuführenden Automatisierungsschritts einzelne Vorgänge lokal am Client des Benutzers automatisiert vorgenommen werden können, kann vorgesehen sein, dass
- in Schritt j) wird ein Programmaufruf zum Ausführen eines Skripts auf dem Client angegeben wird, dem gegebenenfalls einer Anzahl von zu übertragende Dateien und/oder eine Anzahl von Pfaden auf lokal abgespeicherte Dateien beigefügt werden, und
- wobei in Schritt k) wird das Skript vom clientseitigen Datenaustauschprogramm ausgeführt wird, das gegebenenfalls auf die übermittelten oder lokal abgespeicherten Dateien zu greift.

Es kann vorgesehen sein, dass als einzelne Schritte innerhalb eines solchen Automatisierungsschritts die folgenden Handlungen ausgeführt werden:
- das Öffnen von Dateien zur Bearbeitung oder zur Ansicht, und/oder
- das Drucken von Dateien auf einem durch den Programmaufruf vorgegebenen Drucker oder dem Standarddrucker ohne Rückfrage beim Benutzer, und/oder
- das Drucken von Dateien mittels Druckdialog, und/oder
- das Kopieren einer Datei in einen vorgegebenen oder vom Benutzer festzulegenden Ordner, und/oder
- das Schreiben eines E-Mail aufgrund von im Programmaufruf angegebenem Empfänger, Betreff und Mailtext sowie gegebenenfalls einer oder mehrerer vom Server übermittelten und/oder durch Angabe eines Pfads spezifizierten Dateien.

Um einem Benutzer die Verwendung mehrerer Clients zu ermöglichen, kann vorgesehen sein, dass nach dem Aufbau einer Remote-Desktop-Session und einer Datenaustauschverbindung zwischen einem Client und einem Server von einem weiteren Client aus eine weitere Remote-Desktop-Session unter Verwendung des beim Aufbau der Remote-Desktop-Session verwendeten Benutzernamens aufgebaut wird, und
dass bei Detektion des Aufbaus einer solchen weitere Remote-Desktop-Session vom serverseitigen Datenaustauschprogramm die Datenaustauschverbindung, insbesondere auch die Remote-Desktop-Session beendet wird und eine weitere Datenaustauschverbindung zwischen dem weiteren Client und dem Server unter Verwendung desselben Benutzernamens aufgebaut wird.

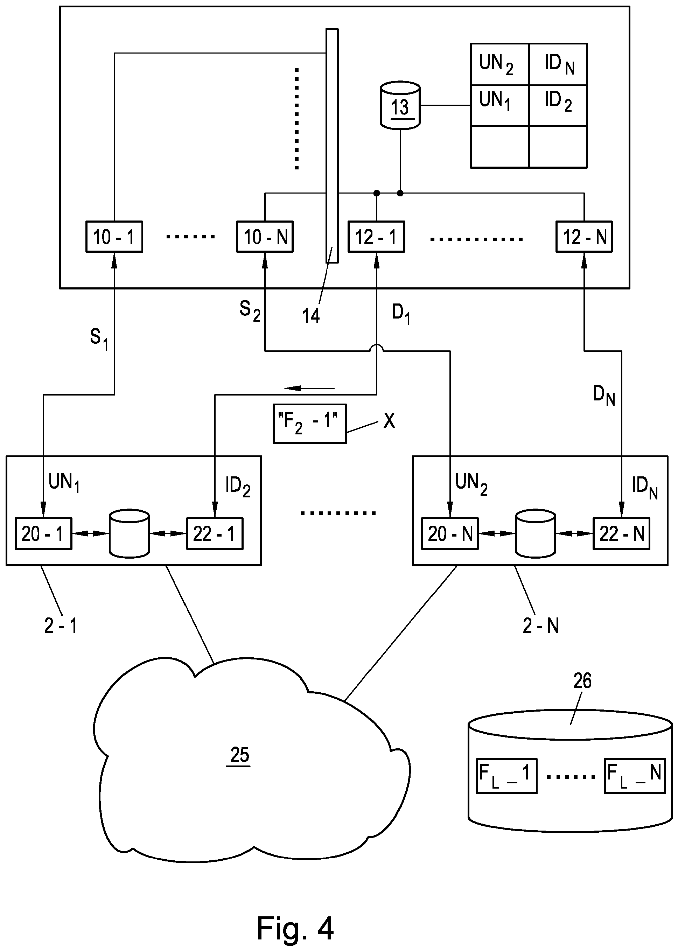

Eine besonders vorteilhafte Ausführungsform einer erfindungsgemäßen Vorgehensweise wird in Zusammenhang mit **Fig. 1** näher dargestellt. In **Fig. 2** der Aufbau und die Nutzung einer Ausführungsform der Erfindung mit einer Mehrzahl von Clients in einem Netzwerk näher dargestellt. **Fig. 3** zeigt die Übernahme einer Datenaustauschverbindung durch einen Client. **Fig. 4** zeigt ein Netzwerk, in dem ein Skripts lokal ausgeführt wird.

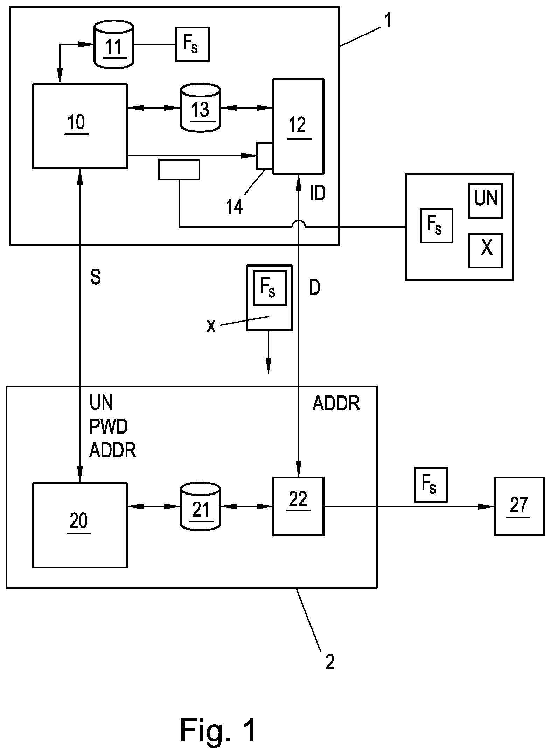

**Fig. 1** zeigt ein System umfassend einen Server 1, auf dem eine Server-Software 10 zum Aufbau einer Remote-Desktop-Session S; S₁; S₂ zwischen dem Server 1 und einem Client 2 installiert ist. Ebenso umfasst das System einen in **Fig. 1** dargestellten Client 2, auf dem eine Client-Software 20 zum Aufbau einer Remote-Desktop-Session S; S₁; S₂ installiert ist, die dazu in der Lage ist, über ein Netzwerk mit der auf dem Server 1 installierten Server-Software 10 zu kommunizieren und eine Remote-Desktop-Session S; S₁; S₂ aufzubauen.

Auf dem Server 10 läuft ein Betriebssystem und es sind unterschiedliche, für den jeweiligen Benutzer des Clients 2 erforderliche Softwarepakete installiert, auf die der Client 2 nach dem Aufbau der Remote-Desktop-Session S; S₁; S₂ virtuell zugreifen kann.

In einem ersten Schritt wird eine Remote-Desktop-Session S; S₁; S₂ zwischen dem Client 2 und dem Server 1 aufgebaut. Zu diesem Zweck wird seitens des Clients 2 ein Benutzername UN und ein Passwort PWD angegeben. Weiters kennt der Client 2 auch die Verbindungsadresse ADDR des Servers 1 im betreffenden Netzwerk, beispielsweise die IP-Adresse des Servers 1.

In einem zweiten Schritt werden die für den Aufbau der Remote-Desktop-Session S; S₁; S₂ verwendeten Benutzername UN und Verbindungsadresse ADDR lokal auf dem Clientrechner 2 abgespeichert. Üblicherweise werden diese Informationen in einer lokalen Konfiguration 21 abgespeichert, das auf Windows-Systemen als Registry bezeichnet wird.

Neben der Client-Software 20 zum Aufbau einer Remote-Desktop-Session S; S₁; S₂ ist auf dem Client 2 ein clientseitiges Datenaustauschprogramm 22 installiert, die mit einem auf dem Server 1 ablaufenden serverseitigen Datenaustauschprogramm 12 eine Datenaustauschverbindung D; D₁; D₂ aufbaut.

Dabei wird vorab und ohne Kenntnis von einer allenfalls zwischen Client 1 und Server 1 bestehenden Remote-Desktop-Session S; S₁; S₂ vom Server 1 an den Client 2 ein die Datenaustauschverbindung D; D₁; D₂ kennzeichnender und serverweit eindeutiger Schlüssel ID vergeben. Zum Aufbau einer Datenaustauschverbindung D; D₁; D₂ ist dem clientseitigen Datenaustauschprogramm 22 die Adresse ADDR des Servers 1 bekannt. Das clientseitige Datenaustauschprogramm 22 sucht, sei es vor oder nach oder während des Laufens einer parallelen Remote-Desktop-Session S; S₁; S₂ zwischen dem Server 1 und dem Client 2 in der lokalen Konfiguration 21 des Clients 2 nach dem Benutzernamen UN eines angemeldeten Benutzers, der eine Remote-Desktop-Session S; S₁; S₂ mit demjenigen Server 1 aufgebaut hat, mit dem auch das clientseitige Datenaustauschprogramm 22 in Datenaustauschverbindung D; D₁; D₂ steht. Im vorliegenden Fall eines erstmaligen Aufbaus einer Remote-Desktop-Session S; S₁; S₂ zwischen Client 2 und Server 1 erkennt das clientseitige Datenaustauschprogramm 22 erstmals einen Eintrag in der lokalen Konfiguration 21, mit dem eine Remote-Desktop-Session S; S₁; S₂ unter einem Benutzernamen UN an der Adresse ADDR des betreffenden Servers 1 gestartet wurde. Sobald das clientseitige Datenaustauschprogramm den betreffenden Benutzernamen UN gefunden hat, überträgt diese den Benutzernamen UN an das serverseitigen Datenaustauschprogramm 12. Das serverseitige Datenaustauschprogramm 12 sucht seinerseits nach einer von der Server-Software 10 aufgebauten Remote-Desktop-Session S; S₁; S₂, bei der ein Benutzer mit einem bestimmten vorgegebenen Benutzernamen UN eingeloggt ist. Die serverseitig zur Verfügung stehenden Informationen, namentlich der Benutzername UN, der für die betreffende Remote-Desktop-Session S; S₁; S₂ verwendet wird, und der Schlüssel ID, den das serverseitige Datenaustauschprogramm 12 für den Client 1 vergeben hat, werden einander zugeordnet und in einer Zuordnungstabelle 13 abgespeichert.

Im Rahmen der Ausführung eines Programms im Rahmen der Remote-Desktop-Session S; S₁; S₂ auf dem Server 1 besteht die Möglichkeit, dass dieses Programm auch auf Routinen zugreift, die durch das serverseitige Datenaustauschprogramm 12 zur Verfügung gestellt werden. Hierfür stellt das serverseitige Datenaustauschprogramm 12 eine Schnittstelle 14 zur Verfügung, über die ein im Rahmen der Remote-Desktop-Session S; S₁; S₂ ablaufendes Programm Programmaufrufe X absetzen kann. Übergibt ein solches Programm einen Programmaufrufe X an diese Schnittstelle 14, so sucht das serverseitige Datenaustauschprogramm 12 den Schlüssel ID desjenigen Clients 1, der entsprechend der Zuordnungstabelle 13 den Benutzernamen UN des die Remote-Desktop-Session nutzenden des Benutzers aufweist. Das serverseitige Datenaustauschprogramm 12 sendet den abgegebenen Programmaufruf X an denjenigen Client 1 bzw an das Datenaustauschprogramm 22 desjenigen Clients 1, dem der betreffende Schlüssel ID zugeordnet ist. Darüber hinaus besteht die Möglichkeit, dass neben dem bloßen Programmaufruf X auch Dateien F_{S} vom Server 1 an den Client 2 übermittelt werden kann.

Im vorliegenden Fall wird beispielsweise dargestellt, wie ein auf dem Server 1 abgespeichertes und beispielsweise in einer Datenbank 11 gespeichertes Dokument F_{S} clientseitig ausgedruckt werden kann. Zu diesem Zweck ruft die Remote-Desktop-Session Serversoftware 10 die Schnittstelle 14 auf und übergibt der Schnittstelle 14 neben einem zum Drucken auffordernden Programmaufruf X auch noch zusätzlich die vom Client 2 lokal auszudruckende Datei F_{S}. Nachdem vom serverseitigen Datenaustauschprogramm 12 unter Zuhilfenahme der Zuordnungstabelle 13 identifiziert ist, an welchen Client 2 bzw. an welches clientseitige Datenaustauschprogramm 22 der Programmaufruf X sowie die dem Programmaufruf X angehängte Datei F_{S} zu übermitteln sind, werden der zum Drucken verwendete Programmaufruf X sowie das auszudruckende elektronische Dokument F_{S} von dem serverseitigen Datenaustauschprogramm 12 an das betreffende clientseitige Datenaustauschprogramm 22 des ausgewählten Clients 2 übermittelt. Das clientseitige Datenaustauschprogramm 22 empfängt die Datei F_{S} sowie den im Programmaufruf X enthaltenen Druckbefehl und führt diesen auf einem clientseitigen Drucker 27 entsprechend der am Client 2 vorgenommenen lokalen Konfiguration 21 aus.

Eine das Drucken betreffende lokale Konfigurationsinformation ist auf Windows-Systemen üblicherweise auch in der Registry 21 abgespeichert und gibt an, welches clientseitige Programm konkret dazu verwendet werden soll, das Drucken der Datei F_{S} zu bewerkstelligen. Wird beispielsweise ein Druckbefehl und eine Datei F_{S} im PDF-Format vom Server 1 an den Client 2 übertragen, so ist für den Server 1 mangels Kenntnis der lokalen Konfiguration des Clients 2 nicht klar, welches Programm zum Ausdrucken der Datei F_{S} verwendet wird. Auch ist es in der Regel nicht möglich bzw auch nicht gewünscht, serverseitig vorzuschreiben, welche Programme der Client 2 zum Ausdrucken von Dokumenten F_{S} verwenden soll. Daher wird der Druckbefehl von dem lokalen Datenaustauschprogramm 22 des Clients 2 entsprechend der lokalen Konfiguration 21 in einen Befehl umgewandelt, der das auf dem Client 2 verfügbare Programm zur Behandlung zum Ausdrucken des betreffenden Dokuments F_{S} veranlasst. Anschließend wird das Dokument F_{S} gedruckt und steht dem Benutzer des Clients 2 in Papierform zur Verfügung.

Von besonderem Vorteil sind dabei auch unterschiedliche Druckoptionen. So kann beispielsweise im Programmaufruf X serverseitig spezifiziert werden, dass aufgrund des Druckbefehls ein Druck auf einem, lokal spezifizierten Standarddrucker 27 oder auf einem Ausweichdrucker vorgenommen werden soll. Schließlich kann dem Benutzer auch die Wahlmöglichkeit eingeräumt werden, welchen Drucker 27 er zum Drucken des betreffenden Dokuments F_{S} verwenden möchte. In diesem Fall wird das in lokalen Konfiguration 21 spezifizierte Programm angewiesen, vor dem Ausdruck einen Druckdialog zur Verfügung zu stellen, in dem der Benutzer aus den zur Verfügung stehenden Druckern 27 auswählen kann und allenfalls darüber hinaus noch weitere Druckoptionen spezifizieren kann.

Neben dem Ausdrucken von durch den Server 1 übermittelten Dokumenten F_{S} besteht durch Auswahl eines entsprechenden Programmaufrufs X auch die Möglichkeit, dass ein vom Server 1 an den Client 2 übertragenes Dokument F_{S} angezeigt wird. Auch für das Anzeigen von Dokumenten F_{S} ist typischerweise ein dem betreffenden Dateityp des Dokuments F_{S} zugeordnetes Standardprogramm SP in der lokalen Konfiguration 21 des Clients 2 abgespeichert, das bei entsprechendem Aufruf unter Angabe des Dokuments F_{S} durch den Client 2 das betreffende Dokument für den Benutzer visuell darstellt.

Ein weiterer Programmaufruf X, der vom Server 1 an den Client 2 übermittelt werden kann, ist ein Aufruf zum Versenden eines Mails. Der Empfänger, der Betreff und der Textinhalt des Mails können dabei durch das in der Remote-Desktop-Session ablaufende Programm vorgegeben und an im Programmaufruf X das Interface 14 übertragen werden. Darüber hinaus besteht auch die Möglichkeit, dass auf dem Server 1 Dateien F_{S} als Anhang mit dem E-Mail mitübertragen werden. Langt ein derartiger Programmaufruf X beim Client 2 ein, so wird dessen Standard E-Mail-Programm vom clientseitigen Datenaustauschprogramm 22 dazu veranlasst, unter Verwendung der Standard E-Mail-Adresse für ausgehende E-Mails ein neues E-Mail zu erstellen, dem die in dem Programmaufruf X angegebenen Informationen, wie Empfänger, Betreff, Textinhalt und Anhänge, zugewiesen werden. Allenfalls kann auch spezifiziert werden, ob das Versenden des betreffenden E-Mails mit oder ohne Rückfrage beim Benutzer des betreffenden Clients 2 erfolgt.

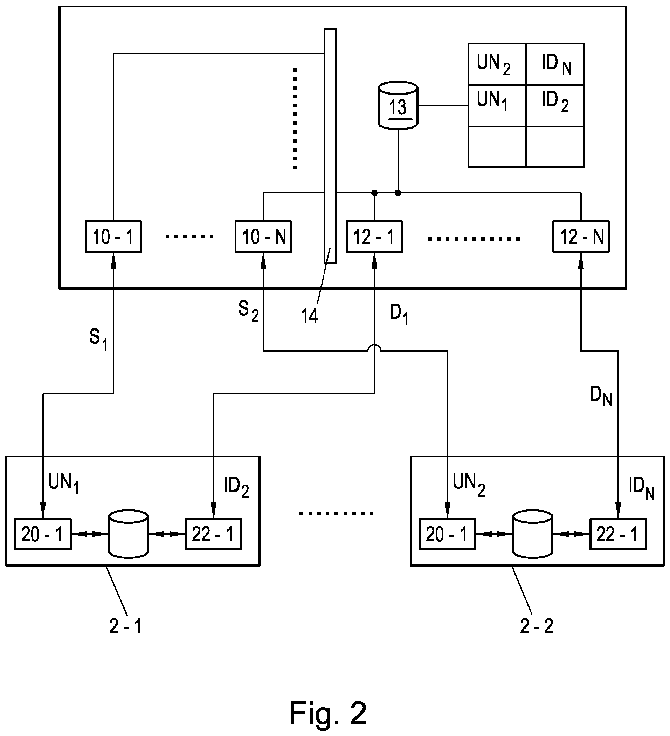

Eine weitere bevorzugte Ausführungsform der Erfindung mit einen Server 1, der dem in **Fig. 1** dargestellten Server entspricht und der mit einer Vielzahl von Clients in Datenverbindung steht, ist in **Fig. 2** dargestellt. Die einzelnen Clients haben dabei typischerweise denselben Aufbau wie die in **Fig. 1** dargestellten Clients.

Dabei ist zu beachten, dass auf jedem einzelnen Client jeweils eine Client-Software 20 zum Aufbau einer Remote-Desktop-Session S; S₁; S₂ und auch jeweils ein clientseitiges Datenaustauschprogramm 22-N, ..., 22-N zum Aufbau jeweils einer Datenaustauschverbindung D; D₁; D₂ abläuft. Auf dem Server 1 läuft für jeden einzelnen Client 2-1, ..., 2-N jeweils Server-Programm 10-1, ..., 10-N sowie ein serverseitiges Datenaustauschprogramm 12-1, ..., 12-N ab. Über die betreffende Zuordnungstabelle 13 wird sichergestellt, dass jeder einzelne Client 2-1, ..., 2-N mittels des jeweils ihm zugeordneten serverseitigen Datenaustauschprogramms 12-1, ..., 12-N jeweils diejenigen Programmaufrufe X erhält, die durch Aufruf aus einer ihm zugeordneten Remote-Desktop-Session S; S₁; S₂ entstanden sind.

Wie auch beim ersten Ausführungsbeispiel der Erfindung können die Remote-Desktop-Session S; S₁; S₂ sowie die Datenaustauschverbindung D; D₁; D₂ unabhängig voneinander aufgebaut werden. Für den Aufbau einer Remote-Desktop-Session S; S₁; S₂ werden dabei die im Zusammenhang mit der ersten Ausführungsform der Erfindung beschriebenen Schritte durchgeführt, wobei am Ende des Aufbaus der Remote-Desktop-Session S; S₁; S₂ in die lokale Konfiguration 21 des Clients 2-1, ..., 2-N jeweils der Benutzername UN sowie die Adresse des Servers ADDR abgespeichert werden. Unabhängig davon wird beim Aufbau der Datenaustauschverbindung D; D₁; D₂ jeweils serverseitig ein Schlüssel ID₁, ID_{N} vergeben, der jede aufgebaute Datenaustauschverbindung D; D₁; D₂ eindeutig identifiziert. Sofern eine Remote-Desktop-Session S; S₁; S₂ zwischen einem der Clients 2-1, ..., 2-N und dem Server 1 bereits aufgebaut wurde und ein entsprechender Eintrag in der lokalen Konfiguration 21 eines Clients 2-1, ..., 2-N bereits erstellt wurde, kann das clientseitige Datenaustauschprogramm 22-1, ..., 22-N des betreffenden Clients 2-1, ..., 2-N den jeweiligen Benutzernamen UN₁, UN₂ aus der lokalen Konfiguration 21 des jeweiligen Clients 2-1, ..., 2-N auslesen und an das jeweilige serverseitige Datenaustauschprogramm 12 übermitteln, das in diesem Fall den betreffenden Verbindungsschlüssel ID₁, ID_{N} dem Benutzernamen UN₁, UN₂ zuordnet und diese Zuordnung in der Zuordnungstabelle 13 abspeichert. Selbst dann, wenn im Moment auf einem bestimmten Client 2-1, ..., 2-N aktuell keine Remote-Desktop-Session S; S₁; S₂ läuft, kann aufgrund der in der lokalen Konfiguration abgespeicherten zuletzt vorgenommenen Zuordnung zwischen Serveradresse ADDR und Benutzernamen UN eine Meldung des clientseitigen Datenaustauschprogramms 22 an das serverseitige Datenaustauschprogramm 12 ergehen, woraufhin dieses eine Eintragung in der Zuordnungstabelle 13 vornimmt.

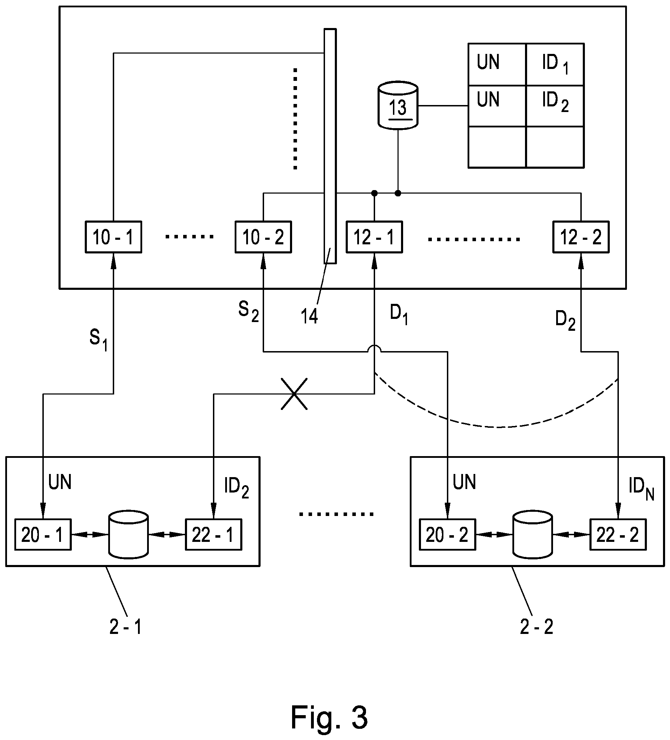

Nicht jeder der Benutzer muss immer denselben Client-Rechner 2-1, ..., 2-N verwenden. Es können durchaus, wie in **Fig. 3** dargestellt, Szenarien eintreten, dass einzelne Benutzer von unterschiedlichen Clients 2-1, ..., 2-N aus Remote-Desktop-Sessions S₁, ..., S_{N} mit dem Server 1 aufbauen. In diesem Fall besteht die Möglichkeit, dass bereits eine Datenaustauschverbindung D₁ zwischen einem Client 2-1 und dem Server 1 besteht, während sich derselbe Benutzer von einem anderen Client 2-2 aus eine Remote-Desktop-Session S₂ startet und auch eine weitere Datenaustauschverbindung über einen weiteren Client 2-2 zum Server 1 aufbauen möchte.

Ein solcher Fall kann von dem serverseitigen Datenaustauschprogramm 12 erkannt werden, da in einem solchen Fall versucht wird, von unterschiedlichen Clients 2-1, 2-2 aus eine Datenaustauschverbindung zum Server unter Verwendung desselben Benutzernamens UN aufzubauen.

Eine Möglichkeit der Behandlung eines solchen Phänomens besteht darin, die Datenaustauschverbindung D₂ mit dem zuletzt anfragenden Client 2-2 aufzubauen und ohne weitere Rückfrage mit dem Benutzer die bisherige Datenaustauschverbindung D₁ zu beenden. Fortan werden Programmaufrufe X, die von der Server-Software 10 über die Schnittstelle 14 und das serverseitige Datenaustauschprogramm 12 fortan ausschließlich an denjenigen Client 2-2 übermittelt, dessen Datenaustauschverbindung D₁ zuletzt aufgebaut wurde.

Alternativ können jedoch auch bestimmte Rückfragemechanismen vorgesehen werden, die es erlauben, denjenigen Client 2 zu identifizieren, an dem sich der Benutzer tatsächlich befindet. Zu diesem Zweck kann beispielsweise eine Meldung vom serverseitigen Datenaustauschprogamm 12 an beide denselben Benutzernamen verwendenden clientseitigen Datenaustauschprogamm 22-1, 22-2 übermittelt werden, wobei der betreffende Benutzer aufgefordert wird, anzugeben, ob er sich tatsächlich am betreffenden Client 2 befindet. Dabei wird ihm ein Dialog mit einem Bedienelement angezeigt, das er zur Bestätigung drücken soll. Betätigt er ein Bedienelement, das aufgrund der Meldung auf dem Client 2 angezeigt wird, so sendet derjenige Client 2-2, auf dem der Benutzer das Bedienelement betätigt hat, eine diesbezügliche Meldung an den Server 1 zurück, sodass dieser eine Zuordnung des betreffenden Benutzers zu demjenigen Client 2-2 vornimmt, von dem aus die Bestätigung übermittelt wurde. In der Zuordnungstabelle 13 des Servers wird die ID des Clients 2-2 dem Benutzernamen UN zugeordnet.

Auf diese Weise ist es nicht nur möglich, dass Benutzer in einzelnen lokalen Netzwerken Clients 2-1, 2-2 können und Bedienhandlungen von unterschiedlichen Clients 2-1, 2-2 aus vornehmen können. Es ist darüber hinaus auch möglich, dass einzelne Benutzer mehrere Geräte wie beispielsweise mobile Geräte als Clients 2-1, 2-2 etc. erhalten, über die sie von unterschiedlichen Positionen aus mit dem betreffenden Server 1 kommunizieren können.

Eine bevorzugte Weiterbildung, die gerade bei lokalen Netzwerken 25 mit einer Vielzahl von Clients 2-1, ..., 2-N von Vorteil ist, jedoch auch unabhängig davon verwendet werden kann, ermöglicht den Zugriff auf lokale auf dem Client 2-1, ..., 2-N oder in einem lokalen Netzwerk 25, auf das der jeweilige Client 2-1, ..., 2-N Zugriff hat, abgespeicherte Dateien. In diesem Zusammenhang besteht die Möglichkeit, in der auf dem Server 1 der Remote-Desktop-Session laufenden Datenbank lediglich Verweise auf Dateien F_{L} abzuspeichern, die sich im lokalen Netzwerk 25 befinden, in dem sich auch die Clients 2-1, ..., 2-N befinden. Haben beispielsweise mehrere Clients Zugriff 2-1, ..., 2-N auf ein Netzlaufwerk 26, so können diese auch ohne Verwendung des Servers 1 auf die Dateien F_{L} gemeinsam zugreifen.

Soll nun in einer Remote-Desktop-Session S₁ Daten über diese lokal abgespeicherten Dateien F_{L} behandelt werden, sollen die betreffenden Dateien F_{L} nicht auf dem Server 1 abgespeichert werden, so kann beispielsweise im Rahmen Remote-Desktop-Session S₁ auf dem Server 1 eine Abfrage nach auf dem Server abgespeicherten Eigenschaften dieser Dateien F_{L} vorgenommen werden, auch wenn sich diese Dateien gar nicht auf dem Server befinden. In der Datenbank des Servers findet sich anstelle der betreffenden Datei F_{L} lediglich eine relative Pfadangabe, dh an welcher Stelle sich die Datei im lokalen Netzwerk befindet.

Insbesondere ist es möglich, auf dem Server nach einzelnen solcher lokal abgespeicherten Dateien F_{L} zu suchen und aufgefundene Dateien anzuzeigen. Um eine solche Anzeige zu gewährleisten, wird ein Programmaufruf X erstellt, in dem der betreffende relative Pfad der jeweiligen Datei angegeben ist. Mit diesem Programmaufruf X werden mangels Verfügbarkeit auf dem Server 1 jedoch keine Datei F_{S} übertragen.

Die Art des Programmaufrufs erfolgt ähnlich dem ersten Ausführungsbeispiel der Erfindung, wobei anstelle der abgespeicherten Datei F_{S} bloß ein Dateipfad angegeben wird. Der Dateipfad wird im betreffenden Programmaufruf X an den Client 2-1 übermittelt. In der Konfiguration 21 des Clients 2 ist ein Pfadpräfix eingestellt, das dem im Programmaufruf erhaltenen Pfad vorangestellt werden kann, um einen im lokalen Netzwerk 25 des Clients 2 gültigen Pfad der Datei F_{L} zu erhalten. Ausgehend von dem so zusammengesetzten endgültigen Dateipfad kann nun die im Programmaufruf X festgelegte Aktion hinsichtlich der spezifizierten Datei F_{L} vorgenommen werden.

Das lokal abgespeicherte Pfadpräfix hat insbesondere den Vorteil, die jeweils für den Client gültige Zugriffsinformationen wie Laufwerksbezeichnung, Einhängpunkt Datenübertragungsprotokoll, die jeweils ausschließlich von der Art der Verbindung des Clients 2 mit der Datenbank 26 abhängen, anzugeben, ohne dass dies konkret auf dem Server 1 vorgenommen werden bräuchte.

So reicht es aus, auf dem Server 1 ein relative Pfadangabe abzuspeichern, der die Lage der Datei F_{L} relativ zu einem vorgegebenen Pfad angibt. Für jeden einzelnen Client wird ein Pfadpräfix angegeben, das spezifiziert, auf welche Weise der Wurzelknoten des jeweiligen durch den Server 1 spezifizierten Pfades erreicht werden kann. So kann diese gemeinsame Datenbank 26 beispielsweise bei einem der Clients 2-1 auf dem Laufwerksbuchstaben I eingehängt sein, während auf einem Unix-Client derselbe Pfad unter \media\S eingehängt ist. Auf einem mobilen Notebook, das ausschließlich über das Internet mit der Datenbasis verbunden ist, kann ein entsprechendes Datenübertragungsprotokoll wie beispielsweise SSH oder FDP spezifiziert und dem Pfad als Präfix vorangestellt werden.

Eine weitere bevorzugte Ausführungsform der Erfindung ermöglicht es, eine Vielzahl von auf dem Server 1 spezifizierten Aktionen hintereinander auf dem Client 2 auszuführen, beispielsweise um die mehrmalige Übertragung größerer Datenmengen zwischen Client 2 und Server 1 zu vermeiden. So kann beispielsweise ein Anwendungsfall der Erfindung darin bestehen, dass ein auf der Remote-Desktop-Session S; S₁; S₂ ablaufendes Programm den Client 2 anweisen möchte, eine von ihm getroffene Auswahl von lokal abgespeicherten Dokumenten F_{L}-1, ..., F_{L}-N zu einem gesamten Dokument F_{L} zusammenzufassen. Für das Zusammenfassen von Dokumenten F_{L}-1, ..., F_{L}-N, beispielsweise von PDF-Dokumenten, stehen unterschiedliche Softwarepakete zur Verfügung, wobei für den Server 1 nicht klar ist, welches der Softwarepakete auf dem Client 2 installiert ist. Um nun zu vermeiden, dass sämtliche der Dateien F_{L}-1, ..., F_{L}-N zum Zwecke des Zusammenfügens vom Client 2 an den Server 1 übermittelt werden und eine zusammengefügte Datei F_{L}-N anschließend wieder vom Server 1 an den Client 2 übermittelt wird, kann auch ein Skript vom Server 1 an den Client 2 übermittelt werden, in dem festgelegt ist, dass eine bestimmte Auswahl von PDF-Dateien F_{L}-1, ..., F_{L}-N, die sich die Auswahl beispielsweise aus einer auf dem Server 1 ausgeführten Datenbankabfrage ergibt, zusammengefügt und als gemeinsames Dokument F_{L} abgespeichert werden soll. Dieses Skript wird an den Client 2 verschickt, in dessen lokaler Konfiguration 21 ein Standardprogramm SP für das Zusammenfügen von PDF-Dokumenten abgelegt ist. Der Client 2 sucht die betreffenden lokal abgespeicherten Dateien F_{L}-1, ..., F_{L}-N wie im vorigen Ausführungsbeispiel dargestellt und fügt diese mit dem ihm zur Verfügung stehenden Standardprogramm SP zu einem großen Dokument F_{L} zusammen und stellt dieses für den Benutzer entsprechend dar.

## Patentansprüche

1. Verfahren zum Durchführen eines von einem Server (1) spezifizierten Programmaufrufs durch einen Client (2),
a) wobei auf Anfrage des Clients (2) zwischen dem Client (2) und dem Server (1) eine Remote-Desktop-Session (S₁) aufgebaut wird, wobei vom Client (2) aus ein dem Benutzer zugewiesener Benutzername (UN) und ein Passwort (PWD) an den Server (1) übermittelt werden, dessen Verbindungsadresse (ADDR) vom Benutzer angegeben wird,
b) wobei die Verbindungsadresse (ADDR) und der Benutzername (UN) auf dem Client (2) nach dem Aufbau der Remote-Desktop-Session (S₁) lokal abgespeichert werden,
c) wobei auf dem Client (2) ein clientseitiges Datenaustauschprogramm (22) abläuft, das eine Datenaustauschverbindung (D₁) zu einem auf dem Server (1) ablaufenden serverseitigen Datenaustauschprogramm (12) herstellt, wobei das serverseitige Datenaustauschprogramm (12) nach dem Aufbau der Datenaustauschverbindung (D₁) einen die betreffende Datenaustauschverbindung (D₁) eindeutig kennzeichnenden Schlüssel (ID) vergibt,
d) wobei das clientseitige Datenaustauschprogramm (22) aufgrund der lokal abgespeicherten Zuordnung zwischen Benutzernamen (UN) und Verbindungsadresse (ADDR) des Servers (1) den Benutzernamen (UN) desjenigen Benutzers ermittelt, der aktuell oder zuletzt eine Remote-Desktop-Session (S₁) mit dem Server (1) aufgebaut hat, und
e) wenn ein solcher Benutzer aufgefunden wurde, der Benutzername (UN) dieses Benutzers vom clientseitigen Datenaustauschprogramm (22) an das serverseitige Datenaustauschprogramm (12) übermittelt wird, und
f) das serverseitige Datenaustauschprogramm (12) den Benutzernamen (UN) gemeinsam mit der betreffenden Datenaustauschverbindung (D₁) kennzeichnenden Schlüssel (ID) in einer Zuordnungstabelle (13) abspeichert,
g) wobei bei Bestehen der Remote-Desktop-Session (S₁) ein Programm (P) auf dem Server (1) ausgeführt wird,
h) wobei dieses Programm (P) einen Programmaufruf (X) an eine von dem serverseitigen Datenaustauschprogramm (12) bereitgestellten Schnittstelle (14) übermittelt, wobei dem Programmaufruf (X) der für die Remote-Desktop-Session (S₁) verwendete Benutzername (UN) beigefügt ist,
i) wobei das serverseitige Datenaustauschprogramm (12) aufgrund des Benutzernamens (UN) in der Zuordnungstabelle (13) denjenigen Schlüssel (ID) sucht, der dem Benutzernamen (UN) zugewiesen wurde, und
j) das serverseitige Datenaustauschprogramm (12) den Programmaufruf (X) an denjenigen Client (2) übermittelt, zu dem eine Verbindung mit dem betreffenden Schlüssel (ID) besteht, und
k) wobei das clientseitige Datenaustauschprogramm (22) den bei ihm eingelangten Programmaufruf (X) an eine lokale clientseitige Konfiguration (21) anpasst und anschließend ausführt.

2. Verfahren nach Anspruch 1,
- wobei in Schritt j) vom serverseitigen Datenaustauschprogramm (12) die im Programmaufruf (X) angegebenen und für den Programmaufruf (X) erforderlichen Dateien (F_{S}) gesucht und gemeinsam mit dem Programmaufruf (X) an den Client (2) übertragen werden, und
- wobei das clientseitige Datenaustauschprogramm (22) in Schritt k) ein in der lokalen Konfiguration (21) des Clients (2) abgespeichertes Standard-Programm (SP) zur Behandlung von Dateien desjenigen Typs ausgewählt wird, der dem Typ der übertragenen Datei (F_{S}) entspricht und dieses Standard-Programm (SP) dazu veranlasst wird, die übertragene Datei (F_{S}) entsprechend dem Programmaufruf (X) zu behandeln, insbesondere zur Ansicht und/oder Modifikation bereitzuhalten oder zu drucken.

3. Verfahren nach Anspruch 1 oder 2,
- wobei der Client (2) mit einem Speicher mit einer Anzahl von Dateien (F_{L}) in Datenverbindung steht,
- wobei in Schritt j) ein Programmaufruf (X) erstellt wird, der eine auf dem Speicher liegende Datei (F_{L}) betrifft,
- in Schritt k) vom clientseitigen Datenaustauschprogramm (22) die betreffende Datei ermittelt und lokalisiert wird, und
- wobei durch das clientseitige Datenaustauschprogramm (22) in Schritt k) ein in der lokalen Konfiguration (21) abgespeichertes Standard-Programm (SP) zur Behandlung von Dateien (F_{L}) desjenigen Typs ausgewählt wird, der dem Typ der übertragenen Datei entspricht und dieses Standard-Programm (SP) dazu veranlasst wird, die betreffende Datei (F_{L}) entsprechend dem Programmaufruf (X) zu behandeln, insbesondere zur Ansicht und/oder Modifikation bereitzuhalten oder zu drucken.

4. Verfahren nach Anspruch 2 oder 3, wobei in der lokalen Konfiguration (21) des Clients (2) für bestimmte Arten von vorgegebenen Typen von Programmaufrufen (X) und Dateitypen Standard-Aufrufe von Standard-Programmen (SP) angegeben sind, und dass für den Fall, dass ein Programmaufruf (X) des betreffenden Typs hinsichtlich einer Datei (F_{L}, F_{S}) des betreffenden Dateityps auszuführen ist, der betreffende Standard-Aufruf unter Verwendung dieser Datei (F_{L}, F_{S}) ausgeführt wird.

5. Verfahren nach einem der vorangehenden Ansprüche,
- wobei in Schritt j) ein Programmaufruf (X) zum Ausführen eines Skripts auf dem Client (2) angegeben wird, dem gegebenenfalls einer Anzahl von zu übertragenden Dateien (F_{S}) und/oder eine Anzahl von Pfaden auf lokal abgespeicherte Dateien (F_{L}) beigefügt werden, und
- wobei in Schritt k) das Skript vom clientseitigen Datenaustauschprogramm (22) ausgeführt wird, das gegebenenfalls auf die übermittelten oder lokal abgespeicherten Dateien zu greift.

6. Verfahren nach einem der vorangehenden Ansprüche, wobei der Programmaufruf (X) insbesondere besteht in:
- dem Öffnen von Dateien (F_{L}, F_{S}) zur Bearbeitung oder zur Ansicht, und/oder
- dem Drucken von Dateien (F_{L}, F_{S}) auf einem durch den Programmaufruf (X) vorgegebenen Drucker oder dem Standarddrucker ohne Rückfrage beim Benutzer, und/oder
- dem Drucken von Dateien (F_{L}, F_{S}) mittels Druckdialog, und/oder
- dem Kopieren einer Datei (F_{L}, F_{S}) in einen vorgegebenen oder vom Benutzer festzulegenden Ordner, und/oder
- dem Schreiben eines E-Mail aufgrund von im Programmaufruf (X) angegebenem Empfänger, Betreff und Mailtext sowie gegebenenfalls einer oder mehrerer vom Server (1) übermittelten und/oder durch Angabe eines Pfads spezifizierten Dateien (F_{L}, F_{S}).

7. Verfahren nach einem der vorangehenden Ansprüche, wobei nach dem Aufbau einer Remote-Desktop-Session (S₁) und einer Datenaustauschverbindung (D₁) zwischen einem Client (2-1) und einem Server (1) von einem weiteren Client (2-1) aus eine weitere Remote-Desktop-Session (S₂) unter Verwendung des beim Aufbau der Remote-Desktop-Session (S₁) verwendeten Benutzernamens (UN) aufgebaut wird, und
dass bei Detektion des Aufbaus einer solchen weitere Remote-Desktop-Session (S₂) vom serverseitigen Datenaustauschprogramm (12) die Datenaustauschverbindung (D₁), insbesondere auch die Remote-Desktop-Session (S₁) beendet wird und eine weitere Datenaustauschverbindung (D₂) zwischen dem weiteren Client (2-2) und dem Server (1) unter Verwendung desselben Benutzernamens (UN) aufgebaut wird.

## Claims

1. Method for performing a program call specified by a server (1) via a client (2),
a) wherein a remote desktop session (S₁) is set up between the client (2) and the server (1) at the request of the client (2), wherein a username (UN) and a password (PWD) allocated to the user are transmitted from the client (2) to the server (1), the connection address (ADDR) of which are specified by the user,
b) wherein the connection address (ADDR) and the username (UN) are stored locally on the client (2) after the remote desktop session (S₁) has been set up,
c) wherein a data exchange program (22) runs on the client (2), and establishes a data exchange connection (D₁) to a server-side data exchange program (12) running on the server (1), wherein the server-side data exchange program (12) assigns a key (ID) that uniquely identifies the relevant data exchange connection (D₁) after the data exchange connection (D₁) has been set up,
d) wherein the client-side data exchange program (22) ascertains, based on the locally stored assignment between the username (UN) and the connection address (ADDR) of the server (1), the username (UN) of the user who has currently or most recently set up a remote desktop session (S₁) with the server (1), and
e) if such a user is found, the username (UN) of this user is transmitted from the client-side data exchange program (22) to the server-side data exchange program (12), and
f) the server-side data exchange program (12) stores the username (UN) together with key (ID) that identifies the relevant data exchange connection (D₁) in an assignment table (13),
g) wherein, if the remote desktop session (S₁) exists, a program (P) is run on the server (1),
h) wherein this program (P) transmits a program call (X) to an interface (14) provided by the server-side data exchange program (12), wherein the username (UN) used for the remote desktop session (S₁) is attached to the program call (X),
i) wherein the server-side data exchange program (12) searches in the assignment table (13) for the key (ID) allocated to the username (UN) based on the username (UN), and
j) the server-side data exchange program (12) transmits the program call (X) to the client (2) with which there is a connection to the relevant key (ID), and
k) wherein the client-side data exchange program (22) adapts the program call (X) it receives to a local client-side configuration (21) and subsequently runs same.

2. Method according to claim 1,
- wherein in step j) the server-side data exchange program (12) searches for the files (F_{S}) that are specified in the program call (X) and are required for the program call (X) and transmits said files together with the program call (X) to the client(2), and
- wherein the client-side data exchange program (22) in step k), a standard program (SP) is selected that is stored in the local configuration (21) of the client (2) for handling files of the type corresponding to the type of the transmitted file (F_{S}) and this standard program (SP) is caused to handle the transmitted file (F_{S}) according to the program call (X), in particular to make said file available for viewing and/or modification or to print it.

3. Method according to claim 1 or 2,
- wherein the client (2) has a data link to a memory having a number of files (F_{L}),
- wherein in step j) a program call (X) is created that relates to a file (F_{L}) located in the memory,
- in step k) the client-side data exchange program (22) ascertains and locates the relevant file, and
- wherein the client-side data exchange program (22) in step k) selects a standard program (SP) that is stored in the local configuration (21) for handling files (F_{L}) of the type corresponding to the type of the transmitted file and this standard program (SP) is caused to handle the relevant file (F_{L}) according to the program call (X), in particular to make said file available for viewing and/or modification or to print it.

4. Method according to claim 2 or 3, wherein standard calls of standard programs (SP) are specified in the local configuration (21) of the client (2) for certain kinds of predetermined types of program calls (X) and file types, and in that, in the event that a program call (X) of the relevant type is to be run with respect to a file (F_{L}, F_{S}) of the relevant file type, the relevant standard call is run using this file (F_{L}, F_{S}).

5. Method according to any of the preceding claims,
- wherein in step j) a program call (X) for running a script on the client (2) is specified, to which are optionally attached a number of files (F_{S}) to be transmitted and/or a number of paths to locally stored files (F_{L}), and
- wherein in step k) the script is run by the client-side data exchange program (22), which optionally accesses the transmitted or locally stored files.

6. Method according to any of the preceding claims, wherein the program call (X) in particular consists of:
- opening files (F_{L}, F_{S}) for editing or viewing, and/or
- printing files (F_{L}, F_{S}) on a printer predetermined by the program call (X) or the standard printer without consulting the user, and/or
- printing files (F_{L}, F_{S}) by means of print dialogue, and/or
- copying a file (F_{L}, F_{S}) into a predetermined folder or a folder to be defined by the user, and/or
- writing an email based on the recipient, subject and body text specified in the program call (X) and optionally one or more files (F_{L}, F_{S}) transmitted by the server (1) and/or specified by indicating a path.

7. Method according to any of the preceding claims, wherein after a remote desktop session (S₁) and a data exchange connection (D₁) have been set up between a client (2-1) and a server (1), an additional remote desktop session (S₂) is set up from an additional client (2-1) using the username (UN) used when setting up the remote desktop session (S₁), and
in that when the server-side data exchange program (12) detects that such an additional remote desktop session (S₂) has been set up, the data exchange connection (D₁), in particular also the remote desktop session (S₁), is terminated and an additional data exchange connection (D₂) is set up between the additional client (2-2) and the server (1) using the same username (UN).

## Revendications

1. Procédé pour réaliser un lancement de programme spécifié par un serveur (1) par l'intermédiaire d'un client (2),
a) dans lequel, sur demande du client (2), une session de bureau à distance (S₁) est établie entre le client (2) et le serveur (1), dans lequel un nom d'utilisateur (UN) attribué à l'utilisateur et un mot de passe (PWD) sont transmis au serveur (1) à partir du client (2), dont l'adresse de connexion (ADDR) est spécifiée par l'utilisateur,
b) dans lequel l'adresse de connexion (ADDR) et le nom d'utilisateur (UN) sont stockés localement sur le client (2) après l'établissement de la session de bureau à distance (S₁),
c) dans lequel un programme d'échange de données côté client (22) est exécuté sur le client (2) et établit une connexion d'échange de données (D₁) avec un programme d'échange de données côté serveur (12) exécuté sur le serveur (1), dans lequel le programme d'échange de données côté serveur (12) fournit une clé (ID) identifiant de manière unique la connexion d'échange de données (D₁) correspondante après l'établissement de la connexion d'échange de données (D₁),
d) dans lequel le programme d'échange de données côté client (22) détermine le nom d'utilisateur (UN) de l'utilisateur qui a actuellement ou le plus récemment établi une session de bureau à distance (S₁) avec le serveur (1) sur la base de l'attribution stockée localement entre le nom d'utilisateur (UN) et l'adresse de connexion (ADDR) du serveur (1), et
e) si un tel utilisateur est trouvé, le nom d'utilisateur (UN) de cet utilisateur est transmis du programme d'échange de données côté client (22) au programme d'échange de données côté serveur (12), et
f) le programme d'échange de données côté serveur (12) stocke le nom d'utilisateur (UN) ainsi que la clé (ID) identifiant connexion d'échange de données (D₁) correspondante dans un tableau d'attribution (13),
g) dans lequel, si la session de bureau à distance (S₁) existe, un programme (P) est exécuté sur le serveur (1),
h) dans lequel ce programme (P) transmet un lancement de programme (X) à une interface (14) fournie par le programme d'échange de données côté serveur (12), dans lequel le lancement de programme (X) est accompagné du nom d'utilisateur (UN) utilisé pour la session de bureau à distance (S₁),
i) dans lequel le programme d'échange de données côté serveur (12) recherche, sur la base du nom d'utilisateur (UN) dans le tableau d'attribution (13), la clé (ID) qui a été attribuée au nom d'utilisateur (UN), et
j) le programme d'échange de données côté serveur (12) transmet le lancement de programme (X) au client (2) pour lequel il existe une connexion avec la clé (ID) correspondante, et
k) dans lequel le programme d'échange de données côté client (22) adapte le lancement de programme (X) qu'il reçoit à une configuration locale côté client (21) puis l'exécute.

2. Procédé selon la revendication 1,
- dans lequel, à l'étape j), les fichiers (F_{S}) spécifiés dans le lancement de programme (X) et requis pour le lancement de programme (X) sont recherchés par le programme d'échange de données côté serveur (12) et transmis au client (2) avec le lancement de programme (X), et
- dans lequel le programme d'échange de données côté client (22) à l'étape k) est sélectionné un programme standard (SP) stocké dans la configuration locale (21) du client (2) pour le traitement de fichiers du type correspondant au type de fichier transmis (F_{S}) et fait en sorte que ce programme standard (SP) traite le fichier transmis (F_{S}) conformément au lancement de programme (X), en particulier pour le tenir prêt à être consulté et/ou modifié ou pour l'imprimer.

3. Procédé selon la revendication 1 ou 2,
- dans lequel le client (2) est en liaison de données avec une mémoire contenant un certain nombre de fichiers (F_{L}),
- dans lequel, à l'étape j), un lancement de programme (X) est créé, qui concerne un fichier (F_{L}) situé dans la mémoire,
- à l'étape k), le programme d'échange de données côté client (22) détermine et localise le fichier concerné, et
- dans lequel un programme standard (SP) stocké dans la configuration locale (21) est sélectionné par le programme d'échange de données côté client (22) à l'étape k) pour traiter des fichiers (F_{L}) du type correspondant au type du fichier transmis et ce programme standard (SP) est amené à traiter le fichier (F_{L}) en question en fonction du lancement de programme (X), en particulier pour le tenir prêt à être consulté et/ou modifié ou pour l'imprimer.

4. Procédé selon la revendication 2 ou 3, dans lequel des lancements standards de programmes standards (SP) sont spécifiés dans la configuration locale (21) du client (2) pour certains types de lancements de programme (X) et de types de fichiers prédéterminés, et en ce que, dans le cas où un lancement de programme (X) du type correspondant doit être exécuté par rapport à un fichier (F_{L}, F_{S}) du type de fichier correspondant, le lancement standard correspondant est exécuté en utilisant ce fichier (F_{L}, F_{S}).

5. Procédé selon l'une quelconque des revendications précédentes,
- dans lequel, à l'étape j), un lancement de programme (X) pour l'exécution d'un script sur le client (2) est spécifié, auquel un certain nombre de fichiers (F_{S}) à transmettre et/ou un certain nombre de chemins d'accès à des fichiers stockés localement (F_{L}) sont ajoutés le cas échéant, et
- dans lequel, à l'étape k), le script est exécuté par le programme d'échange de données côté client (22) qui, le cas échéant, accède aux fichiers transmis ou stockés localement.

6. Procédé selon l'une quelconque des revendications précédentes, dans lequel le lancement de programme (X) comprend notamment :
- l'ouverture de fichiers (F_{L}, F_{S}) pour les traiter ou les visualiser, et/ou
- l'impression de fichiers (F_{L}, F_{S}) sur une imprimante spécifiée par le lancement de programme (X) ou l'imprimante standard sans consulter l'utilisateur, et/ou
- l'impression de fichiers (F_{L}, F_{S}) au moyen d'un dialogue d'impression, et/ou
- la copie d'un fichier (F_{L}, F_{S}) dans un dossier spécifié ou un dossier à spécifier par l'utilisateur, et/ou
- la rédaction d'un courrier électronique en fonction du destinataire, de l'objet et du texte du courrier spécifié dans le lancement de programme (X) et, le cas échéant, d'un ou plusieurs fichiers (F_{L}, F_{S}) transmis par le serveur (1) et/ou spécifié en donnant un chemin d'accès.

7. Procédé selon l'une quelconque des revendications précédentes, dans lequel, après avoir établi une session de bureau à distance (S₁) et une connexion d'échange de données (D₁) entre un client (2-1) et un serveur (1), une autre session de bureau à distance (S₂) est établie à partir d'un autre client (2-1) en utilisant le nom d'utilisateur (UN) utilisé lors de l'établissement de la session de bureau à distance (S₁), et
en ce que lorsque le programme d'échange de données côté serveur (12) détecte l'établissement d'une telle autre session de bureau à distance (S₂), la connexion d'échange de données (D₁), en particulier également la session de bureau à distance (S₁), est terminée et une autre connexion d'échange de données (D₂) est établie entre l'autre client (2-2) et le serveur (1) en utilisant le même nom d'utilisateur (UN).
